# FASCICULE DE BREVET EUROPEEN

(11) **EP 2 575 563 B1**
(45) Date de publication et mention de la délivrance du brevet: **23.07.2014**
(21) Numéro de dépôt: 11721041.9
(22) Date de dépôt: 23.05.2011
(51) Int. Cl.: A47J 31/06, A47J 31/36

(54) **SYSTÈME ET PROCÉDÉ DE PRODUCTION DE BOISSON INFUSÉE**
SYSTEM UND VERFAHREN ZUR HERSTELLUNG EINES AUFGUSSGETRÄNKS
SYSTEM AND METHOD FOR PRODUCING AN INFUSED DRINK

(30) Priorité: 25.05.2010 FR 1054004
(43) Date de publication de la demande: 10.04.2013
(73) Titulaire: Compagnie Méditerranéenne des Cafés, 06510 Carros (FR)
(72) Inventeur: BLANC, Jean-Pierre, 06000 Nice (FR); GOERING, Alain, 06000 Nice (FR)
(74) Mandataire: Decobert, Jean-Pascal
(86) Numéro de dépôt international: PCT/EP2011/058386
(87) Numéro de publication internationale: WO 2011/147788

(56) Documents cités:
- EP-A1- 1 719 439
- WO-A2-2006/126104

## Description

La présente invention est relative à une machine de production de boisson par infusion ainsi qu'à un système et un procédé de fabrication de telles boissons. Elle s'adresse à des dispositifs utilisant des conditionnements dans lesquels la substance à infuser est contenue. La mouture de café fait partie de telles substances. L'invention s'applique particulièrement aux machines de préparation de boissons de type expresso.

La réalisation d'un café expresso s'effectue par infusion d'une quantité prédéfinie de café torréfié et moulu avec de l'eau chaude à très haute pression au travers d'une chambre d'infusion préalablement fermée.

La démocratisation du café expresso a conduit à l'apparition de machines à café expresso domestiques utilisant des portions pré-dosées de café, sous forme de dosette ou capsule contenant l'exacte quantité de café préalablement torréfié et moulu de façon idéale.

Dans ce domaine, l'infusion est typiquement réalisée par placement de la portion pré-dosée dans un volume, ici appelé chambre d'infusion, au travers duquel on fait passer de l'eau chaude sous pression. En aval de la chambre d'infusion, une boisson issue de l'extraction de la substance infusable est récupérée. La phase d'extraction implique la mise de la chambre en position fermée alors que l'introduction de la substance et son évacuation s'opèrent chambre ouverte.

Pour faciliter le positionnement de la dose tout en limitant ses manipulations, différents systèmes ont été développés tout au long des dernières décennies. L'un des systèmes les plus courants est d'avoir recours à une chambre d'infusion réalisée en deux parties, les configurations ouverte et fermée de la chambre d'infusion pouvant être générées par une mobilité relative de deux parties de la chambre d'infusion. La publication WO-A1-9507041 est une illustration de ce principe avec un conditionnement de substance à infuser sous forme de dose dont le volume intérieur est délimité par une enveloppe à base de papier filtre et par un anneau en matière cartonnée.

L'une des deux demi chambres comporte l'arrivée d'eau chaude sous pression tandis que l'autre présente un bec par lequel est distribué le café infusé depuis la dose contenue dans la chambre d'infusion. La pression d'infusion est assurée par une pompe embarquée dans la machine et est couramment une pompe vibrante dont le principe de fonctionnement repose sur le déplacement d'un noyau magnétique au travers d'un cylindre, sous l'effet d'une bobine magnétique alimentée par la tension alternative du secteur au travers d'une diode. Le cylindre est raccordé de façon étanche au circuit d'eau tant en amont qu'en aval de la pompe. Une diode coupe toutes les demi alternances négatives du secteur et provoque l'alimentation de la bobine pendant la moitié du temps de chaque alternance. L'alimentation de la bobine génère, dans les pièces ferromagnétiques qui l'entourent, un champ magnétique proportionnel au nombre de spires de la bobine et à l'intensité du courant qui la traverse. Le circuit magnétique constitué des pièces ferromagnétiques autour de la bobine est volontairement ouvert à proximité du noyau central. Sous l'effet du champ magnétique de la bobine, une induction tend à fermer ce circuit magnétique par le déplacement du noyau mobile. Un ressort est appliqué sur l'une des faces du noyau pour provoquer son retour en position initiale en l'absence de champ magnétique. Sous l'effet de la tension alternative du secteur, le noyau central est déplacé pendant la moitié du temps d'une alternance sous l'effet du champ magnétique généré par la bobine et revient en position sous l'effet du ressort pendant la seconde moitié du temps de l'alternance.

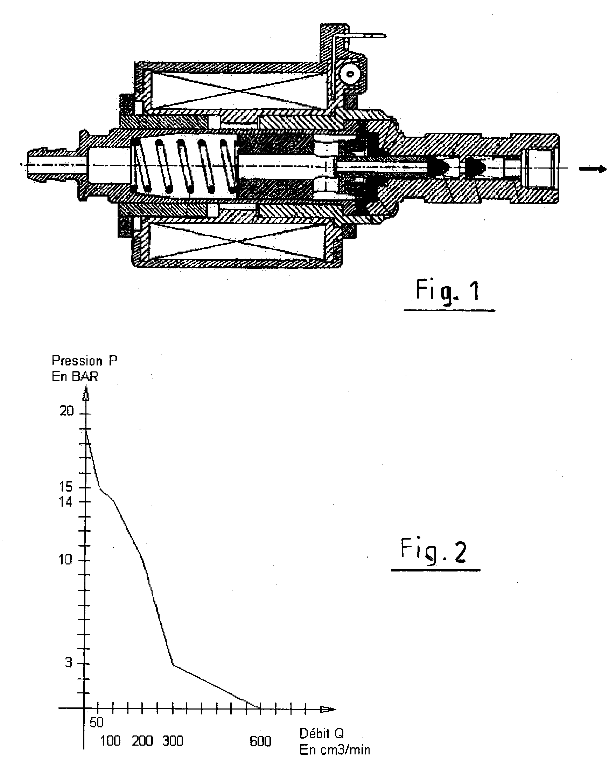

Par un jeu de deux clapets anti-retour correctement disposés en sortie du tube dans lequel évolue le noyau magnétique central, ce noyau aspire de l'eau en amont à l'entrée de la pompe et la repousse vers la sortie en aval. L'effort calibré du ressort permet d'assurer une pression sur l'eau repoussée vers la sortie en aval, qui dépend directement de la course du noyau magnétique qui dépend elle-même de la pression présente en aval de la pompe. On comprend aisément, au vu de la figure 1 représentant une pompe en coupe longitudinale, que, plus la pression en aval de la pompe est importante en situation de repos, plus le ressort de rappel est comprimé sous l'effet de cette pression que l'on appelle "contre-pression". Plus le ressort est comprimé en phase de repos et plus la course du noyau sous l'effort d'appel magnétique de la bobine est limitée. Il s'ensuit un très faible volume rejeté en aval et donc un débit très faible. Par extension, quand la pression dans le circuit est maximale, la course du noyau devient nulle comme le débit de sortie. A l'inverse, lorsque la pression présente dans le circuit est nulle, la course du noyau est totale et donc le débit est maximal.

Cette relation entre la pression présente dans le circuit hydraulique en amont de la pompe et son débit se traduit par une courbe de fonctionnement caractéristique, montrée en figure 2, et qui reste similaire pour toutes les pompes vibrantes du marché.

L'application de ce type de pompe aux machines à café domestiques conduit à devoir gérer la pression en aval de la pompe dans les phases d'infusion pour chercher à définir un point de fonctionnement moyen en pression et en débit correspondant à un écoulement normal du café dans une tasse.

On connaît des machines à café proposant une adaptation à différents types de conditionnements. C'est le cas de la publication WO 2006/126104 A2 qui divulgue une machine dotée d'une partie d'extraction pouvant être interchangée pour recevoir différents types de capsules de préparation de boissons. L'utilisateur sélectionne la partie d'extraction adaptée au type de conditionnement. Il s'agit selon cette antériorité de modifier le système suivant la géométrie des capsules.

Les machines à café actuelles ignorent largement les questions de mécanique des fluides liées au flux d'eau sous pression généré par la pompe. Le demandeur a pourtant constaté que cet aspect a une influence notable sur le fonctionnement d'une machine et la qualité de la boisson infusée.

Les paramètres du flux d'eau en aval de la pompe et la pression en particulier dépendent de la perte de charge dans le circuit hydraulique connecté en aval de la pompe. La perte de charge cumule toutes les pertes de charges générées par chacun des composants installés sur le circuit hydraulique au cours de l'infusion et notamment celle générée par la dosette de café et celle de la tête d'infusion constituée au niveau de la demi chambre d'infusion comprenant le bec de sortie du café. Le demandeur a noté avec surprise que l'influence de ces composants est non négligeable.

La perte de charge de la dosette peut être apparentée à celle d'un média filtrant et est principalement liée à la granulométrie du café moulu et à son tassement.

Chaque variété de café est torréfiée avec un cycle de température particulier pendant une durée prédéterminée pour libérer tous ses arômes. Le cycle de torréfaction est un secret de fabrication propre à chaque torréfacteur pour assurer la meilleure qualité de son café. Après torréfaction, le café est moulu afin d'obtenir une granulométrie particulière à chaque variété pour permettre la meilleure extraction des arômes au contact de l'eau chaude sous pression lors de son infusion.

La variation de granulométrie d'une variété à l'autre de café torréfié moulu entraîne une variation de la perte de charge qui est en outre fonction du degré de tassage de la mouture.

Cette problématique est encore amplifiée lorsque plusieurs machines à café de source différentes peuvent utiliser le même conditionnement de café sous forme de dosette.

Du fait de ce qui précède, la meilleure qualité d'infusion ne peut être assurée avec les techniques actuelles, étant notée la multiplicité des types de dosettes offerte à la vente.

L'invention permet de pallier au moins en partie les inconvénients des techniques connues jusqu'alors et propose à cet effet un système de fabrication de boisson doté d'un dispositif d'infusion présentant une chambre d'infusion destinée à recevoir un conditionnement contenant la substance à infuser et à faire passer un flux d'eau sous pression au travers de la substance à infuser, la chambre d'infusion présentant une partie d'entrée comprenant une tête d'entrée d'eau dans la chambre d'infusion et une partie de sortie comprenant une tête de sortie de boisson infusée, la partie d'entrée et la partie de sortie étant agencées pour être mutuellement éloignées pour ouvrir la chambre d'infusion ou rapprochées pour fermer la chambre d'infusion par des moyens de déplacement. Selon l'invention, la tête de sortie et/ou la tête d'entrée comporte des moyens de fixation amovible. De cette façon, le système rend possible l'interchangeabilité d'organes influant sur les pertes de charges subies par le flux d'eau en aval de la pompe.

Alors que l'état de la technique propose systématiquement des organes fixés définitivement et indifférenciés du reste de la chambre d'infusion, la présente invention combat ces préjugés et offre la possibilité d'un réglage affinée des paramètres découlement fluidique dans la machine grâce à des parties amovibles. En outre les machines à dosettes ou capsules mettent actuellement en oeuvre des chambres d'infusion encastrées dans le reste de la machine et inaccessibles à l'utilisateur. L'invention s'affranchit de cette orientation et permet à l'utilisateur final d'intervenir sur la chambre d'infusion.

Suivant un mode de réalisation avantageux de l'invention, le système inclut une pluralité de têtes d'entrée et/ou de sortie de sorte à offrir à l'utilisateur une large gamme d'adaptation de la machine.

Un cas préféré consiste à faire en sorte que les propriétés des têtes d'entrée et/ou des têtes de sortie, sur le plan des pertes de charges, compensent les variations de pertes de charges induites par des conditionnements de différents types. Un même dispositif d'infusion peut ainsi fonctionner dans des conditions de flux d'eau optimales pour une grande variété de types de conditionnement. De même, l'adaptation permet de faire fonctionner des dispositifs d'infusion différents dans les conditions de flux d'eau optimales pour un conditionnement donné.

Alors que les techniques actuelles se concentrent sur une adaptation de la partie de sortie à la géométrie des conditionnements, négligeant les paramètres de flux d'eau, l'invention propose un réglage de flux à ce niveau, pour différents types de conditionnements. On peut notamment avec des mêmes paramètres de fonctionnement de pompe, réguler les pertes de charges pour qu'elles soient constantes et ce, même si on emploie des conditionnements de types différant par la perte de charges.

D'autres buts et avantages apparaîtront au cours de la description détaillée qui suit. Auparavant, on indique des caractéristiques optionnelles qui peuvent être mises en oeuvre de manière alternative ou cumulée dans le cadre de l'invention :
- le dispositif comprend plusieurs têtes de sortie interchangeables chacune munie de moyens de fixation amovible,
- il comprend plusieurs têtes d'entrée interchangeables chacune munie de moyens de fixation amovible,
- il comprend une pluralité de conditionnements de types différant par la perte de charge qu'ils génèrent sur le flux d'eau, chaque type de conditionnement étant associé à une tête d'entrée et une tête de sortie déterminées de sorte à ce que les pertes de charges cumulées générées par chaque jeu associant un type de conditionnement, une tête d'entrée et une tête de sortie soient identiques,
- la substance à infuser est de la mouture de café au moins une partie des types de conditionnement diffèrent par la granulométrie de la mouture qu'ils contiennent,
- la substance à infuser est de la mouture de café au moins une partie des types de conditionnement diffèrent par le degré de tassage de la mouture qu'ils contiennent.
- pour chaque jeu, la tête d'entrée, la tête de sortie et le conditionnement comportent chacun un moyen d'identification du jeu auquel ils appartiennent,
- les moyens d'identification comportent une portion de surface extérieure d'une couleur pré déterminée et dans lequel la couleur pré déterminée de chaque jeu est différente,
- les moyens de fixation amovible comportent des moyens d'encliquetage,
- les moyens d'encliquetage comportent au moins une portion en relief formée sur un support apte à coopérer avec une portion en relief complémentaire formée sur une surface de montage d'un châssis du dispositif,
- le dispositif comporte une pompe vibrante placée dans le flux d'eau en amont de la chambre d'infusion.

L'invention concerne aussi un procédé de fabrication de boisson infusée comprenant les étapes de réalisation de boisson suivantes :
- introduction d'un conditionnement contenant une substance à infuser dans une chambre d'infusion présentant une partie d'entrée comprenant une tête d'entrée d'eau dans la chambre d'infusion et une partie de sortie comprenant une tête de sortie de boisson infusée,
- rapprochement la partie d'entrée et la partie de sortie de sorte à fermer la chambre d'infusion,
- passage d'un flux d'eau sous pression au travers de la substance à infuser, caractérisé par le fait que l'on effectue les étapes préparatoires suivantes :
- mise à disposition d'une pluralité de conditionnements de types différant par la perte de charge qu'ils génèrent sur le flux d'eau ;
- mise à disposition d'une pluralité de têtes de sortie interchangeables chacune munie de moyens de fixation amovible,
- association d'une tête de sortie à chaque type de conditionnement de sorte à ce que les pertes de charges cumulées générées par chaque jeu associant un type de conditionnement, la tête d'entrée et une tête de sortie soient identiques,
- sélection d'un conditionnement,
- identification de la tête de sortie associée au conditionnement sélectionné,
- réalisation de la boisson infusée avec le conditionnement sélectionné et la tête de sortie associée.

Une variante du procédé de fabrication de boisson infusée est telle que l'on effectue les étapes préparatoires suivantes :
- mise à disposition d'une pluralité de conditionnements de types différant par la perte de charge qu'ils génèrent sur le flux d'eau ;
- mise à disposition d'une pluralité de têtes d'entrée interchangeables chacune munie de moyens de fixation amovible,
- association d'une tête d'entrée à chaque type de conditionnement de sorte à ce que les pertes de charges cumulées générées par chaque jeu associant un type de conditionnement, une tête d'entrée et la tête de sortie soient identiques,
- sélection d'un conditionnement,
- identification de la tête d'entrée associée au conditionnement sélectionné,
- réalisation de la boisson infusée avec le conditionnement sélectionné et la tête d'entrée associée.

Une autre possibilité du procédé de fabrication de boisson infusée est que l'on effectue les étapes préparatoires suivantes :
- mise à disposition d'une pluralité de conditionnements de types différant par la perte de charge qu'ils génèrent sur le flux d'eau,
- mise à disposition d'une pluralité de têtes d'entrée interchangeables chacune munie de moyens de fixation amovible,
- mise à disposition d'une pluralité de têtes de sortie interchangeables chacune munie de moyens de fixation amovible,
- association d'une tête d'entrée et d'une tête de sortie à chaque type de conditionnement de sorte à ce que les pertes de charges cumulées générées par chaque jeu associant un type de conditionnement, une tête d'entrée et une tête de sortie soient identiques,
- sélection d'un conditionnement,
- identification de la tête d'entrée associée au conditionnement sélectionné,
- identification de la tête de sortie associée au conditionnement sélectionné,
- réalisation de la boisson infusée avec le conditionnement sélectionné, la tête d'entrée et la tête de sortie associées.

Les dessins ci-joints sont donnés à titre d'exemples et ne sont pas limitatifs de l'invention. Ils représentent seulement un mode de réalisation de l'invention et permettront de la comprendre aisément.
La figure 1 représente une vue en coupe d'une pompe vibrante.
La figure 2 illustre une courbe débit/pression d'une pompe vibrante selon la figure 1.
Les figures 3 et 4 montrent sous deux angles différents des perspectives d'un dispositif selon l'invention.
Les figures 5 à 8 illustrent différentes étapes d'amovibilité d'une tête de sortie.
Les figures 9 à 17 illustrent différentes étapes d'amovibilité d'une tête d'entrée.
Les figures 18 et 19 montrent respectivement une vue en coupe partielle et une vue en perspective d'un conditionnement pouvant être utilisé dans le cadre de l'invention.

A titre préféré, l'invention s'adresse à des machines utilisant des conditionnements de substance à infuser et permettant de façon au moins en partie automatisée de produire des boissons issues de l'infusion de la substance contenue dans les conditionnements.

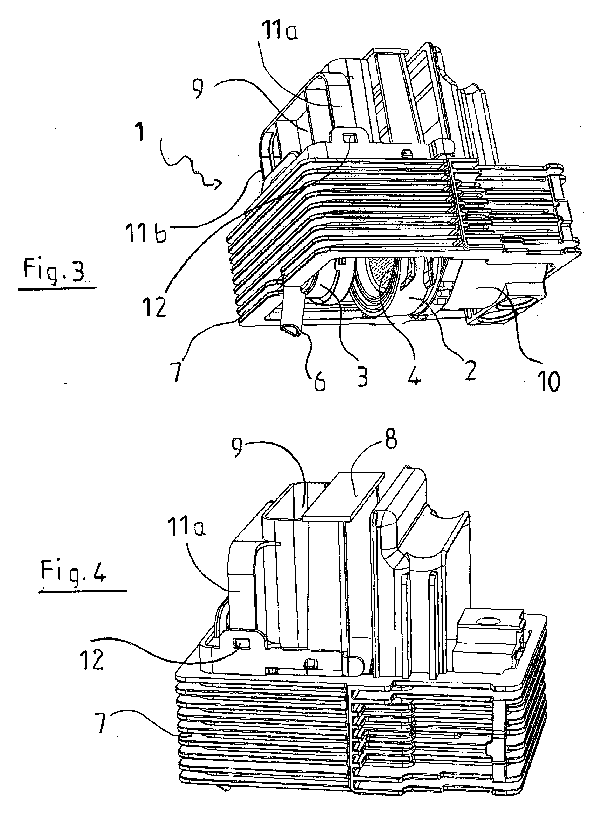

Dans ce cadre, le dispositif 1 montré en figure 3 comporte un châssis 7 sous forme de ceinture périphérique apte à supporter différents composants internes. L'un d'entre eux est une partie d'entrée 2, un autre est une partie de sortie 3, telles que visibles partiellement en figure 3. Les parties 2 et 3 sont susceptibles d'être rapprochées ou éloignées, par exemple par le mouvement de la partie d'entrée 2 qui coopère dans le cas illustré avec un vérin dont le corps 10 est situé dans le prolongement arrière de la partie 2. Ce type de mobilité n'est pas limitatif et tout moyen de déplacement entre dans le cadre de l'invention. De même, des mobilités combinées associant rotation et translation ainsi qu'un mouvement de la partie de sortie 3 sont également possibles.

Lorsqu'elles sont rapprochées et accostées, les parties 2, 3 délimitent un volume intérieur constitutif d'une chambre d'infusion au niveau de laquelle est reçu un conditionnement 21. Pour réaliser les phases d'introduction du conditionnement 21, on peut avoir recours à un élément de chargement 9 doté d'une partie de trémie pour l'introduction du conditionnement 21 et sa mise en place dans la machine.

A titre d'exemple, l'élément 9 comporte un volet permettant de fermer l'ouverture supérieure de la trémie et, éventuellement, des moyens de butée permettant de retenir le conditionnement 21 durant au moins une partie des phases de réalisation de la boisson.

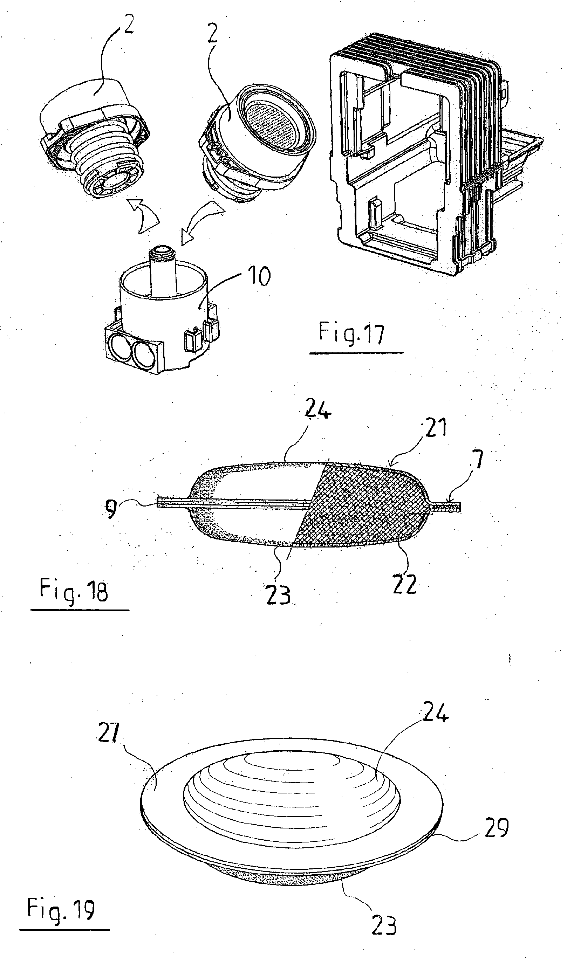

On donne par ailleurs aux figures 18 et 19 une possibilité de réalisation d'un conditionnement.
Est contenue dans une enveloppe une substance à infuser (dans l'exemple sous forme de mouture de café 22, exemple non limitatif pouvant être notamment remplacé par des feuilles de thé hachées ou toute autre substance à infuser). L'enveloppe est ici réalisée avec deux parois 23, 24 à base de papier filtre.

Une partie annulaire 27 entoure l'ensemble et permet de rejoindre les parois 23, 24 au niveau d'un élément de rigidification 29 du conditionnement. Dans ce cas particulier, le conditionnement 21 est essentiellement perméable à l'eau. Ce mode de réalisation n'est pas limitatif et d'autres formes de conditionnement 21 entrent dans le cadre de l'invention. En particulier, l'enveloppe du conditionnement 21 peut être au moins partiellement étanche à l'eau.

Tel qu'indiqué en partie introductive, les conditionnements 21 incorporant la substance à infuser présentent des pertes de charges pour le flux d'eau qui sont variables d'un type de conditionnement à un autre. Ainsi, si la granulométrie d'une mouture de café ainsi que le tassage ou encore la forme géométrique et les propriétés de filtration de ses parois varient, les pertes de charges sont susceptibles d'être modifiées. Le demandeur a constaté que ce phénomène était loin d'être négligeable au regard des propriétés de l'écoulement du flux d'eau.

Dans un cas préféré de l'invention, on peut réaliser un ensemble chambre d'infusion et conditionnement présentant des pertes de charges cumulées identiques en passant d'un type de conditionnement à un autre, la présente invention présentant des moyens permettant d'adapter au moins l'une des têtes 4, 5 du dispositif 1.

Plus précisément, une tête d'entrée 4 équipe la partie d'entrée 2. Dans un mode de réalisation préféré, la tête d'entrée 4 est simplement encastrée ou réalisée d'un seul tenant avec la partie d'entrée 2. Une variante consiste à réaliser la tête d'entrée 4 sous forme d'organe rapporté. A titre d'exemple, la tête d'entrée 4 a la forme d'une cuvette dotée d'une pluralité d'ouvertures permettant le passage de l'eau issue d'un circuit hydraulique joignant la pompe de la machine et la partie d'entrée 2. Une pompe vibrante peut être employée. Le terme « tête d'entrée 4 » ici utilisé s'entend dans son acception la plus large comme toute partie structurelle apte à faire passer le flux d'eau depuis un circuit amont vers l'intérieur de la chambre d'infusion au niveau de laquelle le conditionnement 21 est susceptible d'être introduit et enfermé. En particulier, la tête d'entrée 4 peut comprendre à la différence du cas illustré une buse d'injection traversant ou non une paroi du conditionnement 21.

La tête de sortie 5 peut être réalisée de façon similaire à la tête d'entrée 4 et notamment sous forme d'une cuvette à trous et opère une phase de filtration de la boisson issue de l'infusion par l'écoulement d'eau au travers de la substance à infuser.

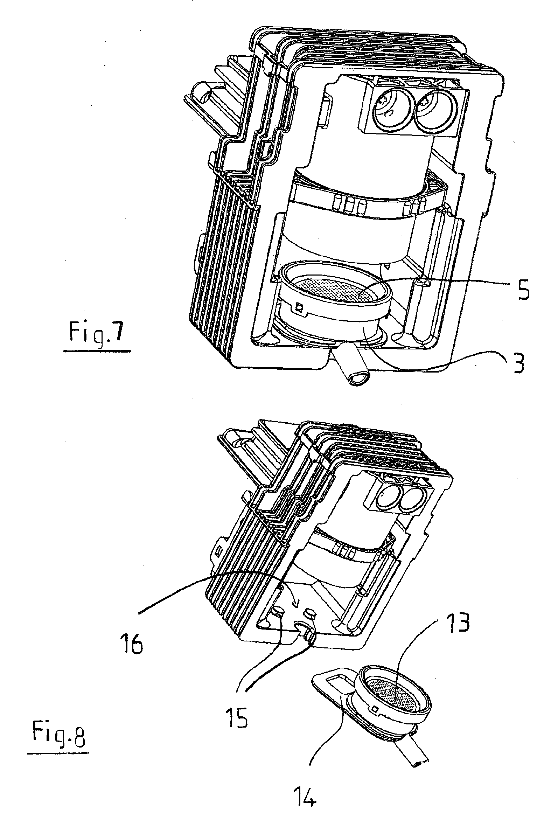

Les figures 7 et 8 montrent plus particulièrement la réalisation d'une tête de sortie 5.

La tête de sortie 5 est avantageusement formée de manière solidaire avec la partie de sortie 3, l'ensemble constituant un seul tenant soit par assemblage soit par construction monobloc. La figure 8 montre par ailleurs le cas où la partie de sortie comporte un support 14 constituant une surface située au dos de la tête de sortie 5 comportant une portion filtrante 13.

Les machines à café actuelles utilisent des dispositifs de douchette et de filtration réalisés de manière définitive et fixe relativement au reste de la machine. Au contraire, selon l'invention, au moins l'une parmi la tête d'entrée et la tête de sortie est réalisée avec des moyens de fixation amovible. On entend par moyens de fixation amovible des moyens permettant de rapporter les têtes 4, 5 sur les autres organes du dispositif d'infusion tout en permettant un démontage tel que la tête 4, 5 en question puisse être interchangeable avec d'autres têtes. Les moyens de fixation amovible sont donc tout moyen d'assemblage permettant le montage et le démontage de la tête 4, 5 considérée de façon à l'interchanger. Les moyens d'assemblage peuvent comprendre des moyens de fixation par encliquetage permettant d'éviter le recours à des vis ou à d'autres moyens impliquant l'emploi d'outillage.

Avantageusement, en ce qui concerne la tête de sortie 5, les moyens de fixation amovible présentent une surface de fixation solidaire d'une partie de châssis 7 du dispositif coopérant avec une partie de contre-butée solidaire de l'élément de chargement 9.

On décrit ci-après plus précisément ce mode de montage et de démontage de la tête de sortie 5, laquelle, dans le cas de l'exemple illustré, est formée d'un seul tenant avec le reste de la partie de sortie 3.

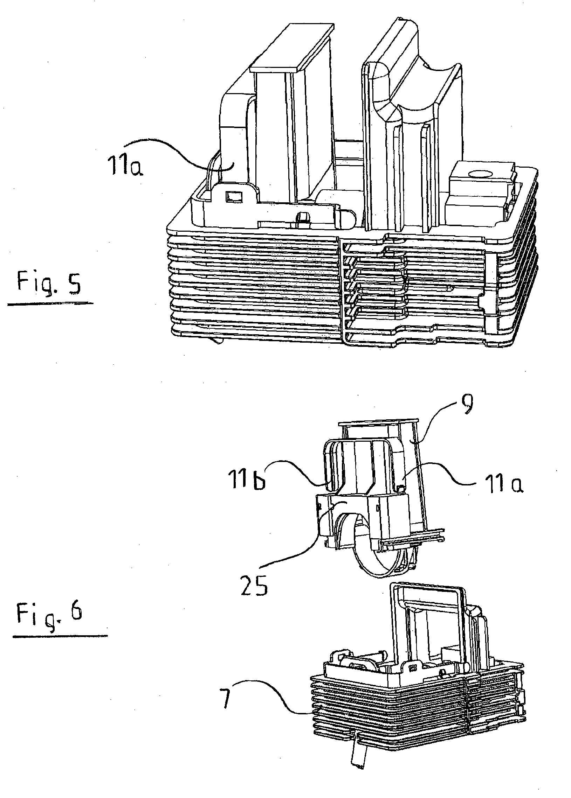

Ainsi que représenté aux figures 3 et 4, l'élément de chargement 9 comporte une paire de pattes 11 a, 11 b chacune dotée d'une partie flexible présentant un élément saillant susceptible de coopérer avec une zone de blocage 12 formée solidairement au châssis 7. La zone de blocage 12 est, dans le cas représenté, réalisée dans deux ouvertures dans lesquelles peuvent s'insérer les parties saillantes de chacune des pattes 11a, 11 b de l'élément de chargement 9. On comprend aisément que la déformation élastique des pattes 11 a, 1 1 b permet d'escamoter leurs parties coopérantes avec la zone de blocage 12 de sorte à libérer l'élément de chargement 9. Ce léger mouvement des pattes 11 a, 11 b est représenté à la figure 5. S'ensuit un mouvement d'extraction de l'élément de chargement 9 relativement au reste du dispositif comme cela ressort de la figure 6.

A ce stade, comme on l'a représenté en figure 7, la partie de sortie 3 n'est plus retenue du côté de la tête de sortie 5 par l'élément de chargement 9 et en particulier par la face de blocage 25 (voir représentation en figure 6) que réalisait l'élément de chargement 9 au regard de la partie de sortie 3. A ce stade, l'opérateur a la faculté de saisir la partie 3 de sorte à la libérer de moyens de blocage complémentaires de la face de blocage 25. Dans le cas représenté, ces moyens de blocage sont réalisés par une surface de montage 16 formée sur la partie interne du châssis et apte à coopérer avec la face inférieure du support 14 de la partie 3. On notera que l'illustration montre des ergots 15 réalisant un relief sur la surface de montage 16 apte à coopérer avec un relief correspondant, femelle dans le cas de l'exemple, sur la face inférieure du support 14. On comprend aisément que cette simple imbrication permet un montage et un démontage répétés et rapides pour l'utilisateur sans risque d'endommagement. Aucun outil n'est par ailleurs nécessaire.

A titre préféré mais non limitatif, la tête d'entrée 4 portée par la partie d'entrée 2 est également dotée de moyens de fixation amovible.

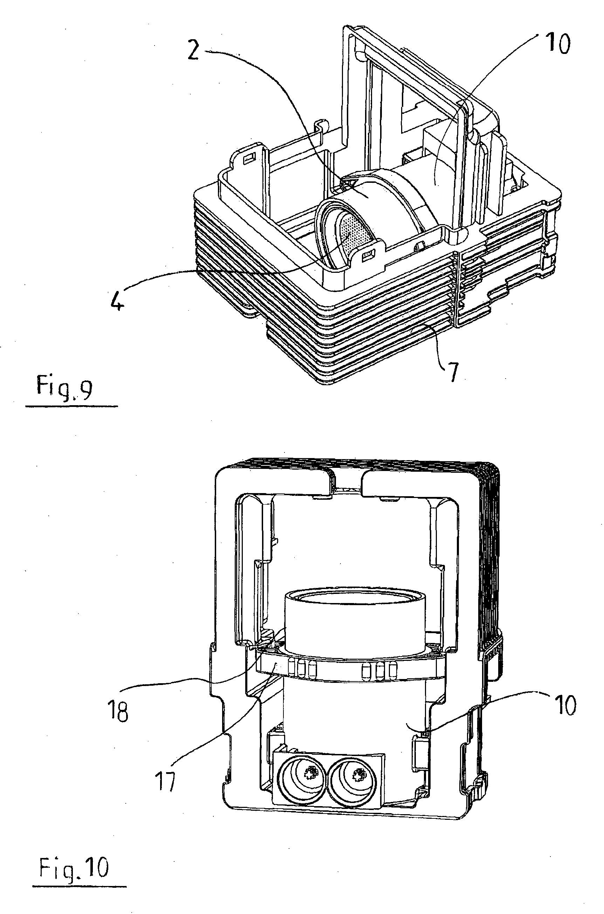

Un exemple d'amovibilité est illustré par les phases des figures 9 à 17.

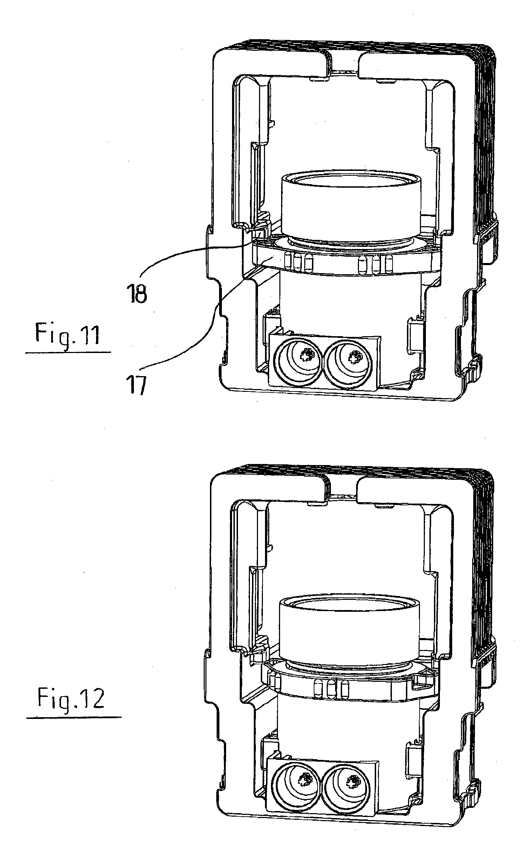

En figure 9, le dispositif est dans une configuration suivant l'étape décrite pour la figure 8 dans laquelle la partie de sortie 3 a été extraite. A ce stade, on peut opérer une libération partielle de la partie d'entrée 2 vis-à-vis des ses moyens de fixation amovible. La figure 10 représente une couronne de blocage 17 formée sur le pourtour de la partie d'entrée 2 de sorte à coopérer avec une butée 18 solidaire du châssis 7 et permettant de maintenir l'ensemble formé par le corps de vérin 10 et la partie 2. Un mouvement de rotation est initié sur la couronne de blocage 17 de sorte à la libérer de la contrainte de la butée 18. Ce mouvement apparaît nettement dans l'enchaînement des figures 11 à 13.

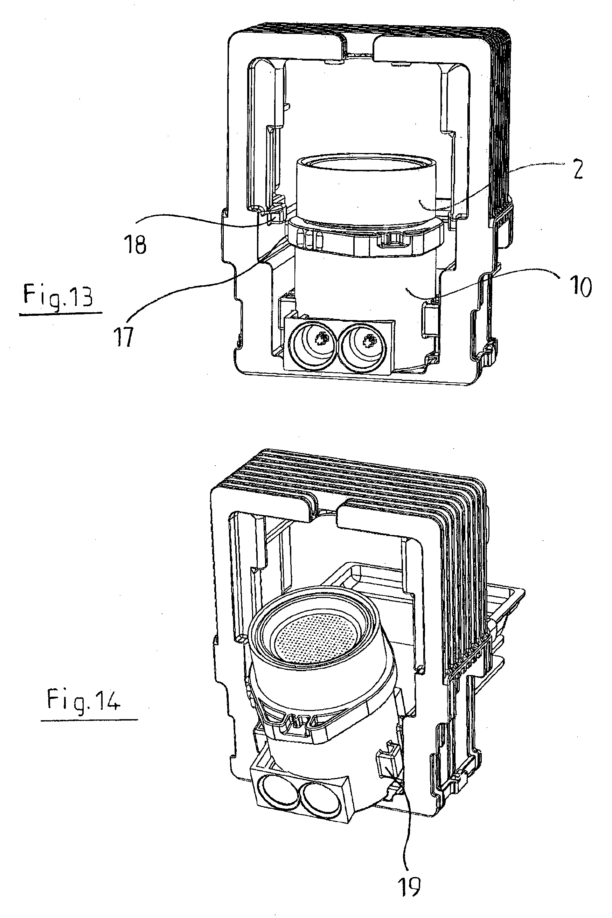

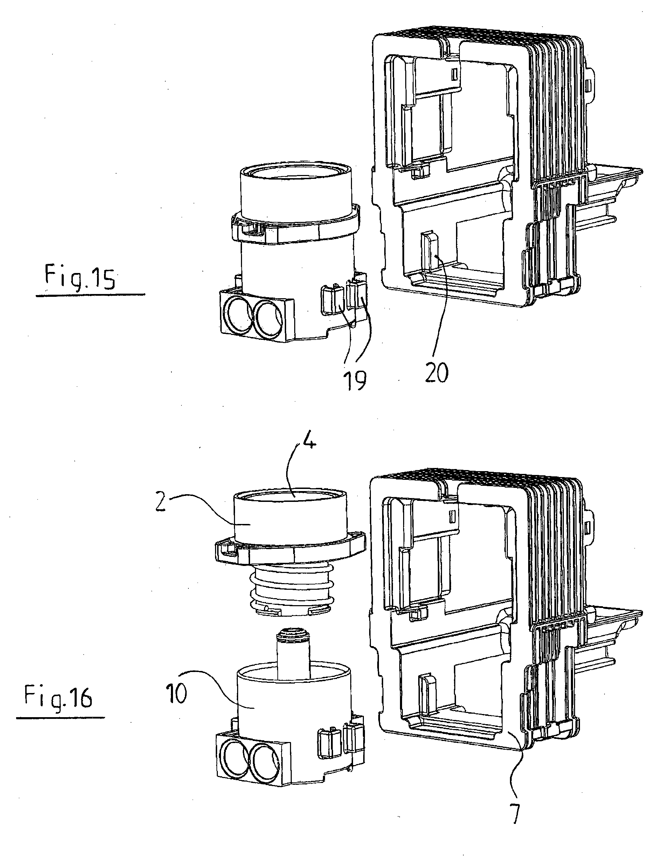

A ce stade, la couronne 17 n'est plus en appui sur la butée 18 et un mouvement de l'ensemble corps de vérin 10 - partie d'entrée 2 peut être opéré par l'utilisateur. Ce mouvement est avantageusement réalisé dans le sens de l'axe longitudinal du vérin pour libérer le corps du vérin 10 de moyens de fixation complémentaires à l'ensemble couronne 17 / butée 18. En effet, comme cela est représenté aux figures 14 et 15, le corps de vérin 10 est ici équipé d'un guide 19 formé par deux surfaces parallèles délimitant un espace de coopération avec un rail 20 solidaire du châssis 7 et n'autorisant qu'un mouvement de translation suivant l'axe du vérin. Cet ensemble de moyens réalise un blocage complémentaire de celui de la couronne 17 et de la butée 18 de sorte à immobiliser l'ensemble corps de vérin 10 / partie d'entrée 2 en position normale de fonctionnement du dispositif d'infusion. Lorsque le guide 19 a pu s'échapper du rail 20, l'ensemble corps de vérin / partie d'entrée 2 peut être extrait du châssis 7 et la partie d'entrée 2 ôtée du corps de vérin 10. Avantageusement, cette extraction s'effectue librement sans moyen de verrouillage à libérer entre le corps de vérin 10 et la partie d'entrée 2. Ce cas n'est pas limitatif et on peut prévoir un élément de fixation à libérer entre ces deux parties.

Enfin, la figure 17 schématise la faculté offerte à l'utilisateur d'interchanger la partie d'entrée 2 de sorte à remplacer celle qui était fonctionnelle par une autre partie 2 présentant une tête d'entrée 4 adaptée au type de conditionnement 21 qu'il souhaite utiliser. Le tout s'effectue ici sans avoir à accéder à des parties électriques.

Le descriptif donné ci-dessus pour le démontage des parties d'entrée 2 et de sortie 3 est applicable, en chronologie inverse, au remontage.

On tire avantageusement profit de ces moyens de fixation amovible pour ajuster les pertes de charges cumulées de sorte à ce qu'elles soient identiques d'un type de conditionnement à un autre. On comprend aisément si un conditionnement 21 est d'un type impliquant une perte de charge plus élevée, on cherchera à la compenser avec une tête d'entrée 4 et une tête de sortie 5 de pertes de charges moindres. On forme ainsi des triplés tête d'entrée 4 / tête de sortie 5 / type de conditionnement dont les valeurs individuelles de pertes de charges sont ajustées. En particulier, les valeurs de pertes de charges des têtes 4, 5 plus facilement modifiables, servent à compenser les variations de pertes de charges du type de conditionnement 21 à utiliser. De cette façon, on notera que la réalisation des conditionnements 21 peut être faite plus librement que sur les machines existantes notamment sans nécessiter de fixer les paramètres de granulométrie et de tassage selon des impératifs de réglages de pertes de charges. La qualité des boissons obtenues est donc améliorée.

La description précédente en référence aux figures mentionne la possibilité d'interchanger aussi bien la tête d'entrée 4 que la tête de sortie 5. Ce cas n'est pas limitatif et des variantes dans lesquelles uniquement l'une des deux têtes, soit la tête d'entrée 4 soit la tête de sortie 5 est amovible entrent dans le cadre de l'invention. Si l'une des têtes est fixe, l'ajustement des pertes de charges s'effectuera en jouant sur des variations entre différents jeux de têtes amovibles.

Par ailleurs, on peut former des moyens d'identification permettant de caractériser les pièces interchangeables pour permettre plus facilement à l'utilisateur de les associer au conditionnement souhaité. Par exemple, des moyens d'identification sous forme de code couleur sont réalisés sur l'extérieur de la tête d'entrée 4, de la tête de sortie 5 et du conditionnement 21.

En pratique, malgré l'utilisation d'une pompe vibrante pour la réalisation de l'écoulement, l'utilisateur peut grâce à l'invention ajuster au mieux l'écoulement de l'eau au travers de la chambre d'infusion. Il est par ailleurs possible de jouer uniquement sur les jeux de têtes et de conditionnements pour régler le fonctionnement, par exemple en ayant un seul paramétrage de pompe pour tous les types de conditionnements.

### REFERENCES

- 1.: Dispositif
- 2.: Partie d'entrée
- 3.: Partie de sortie
- 4.: Tête d'entrée
- 5.: Tête de sortie
- 6.: Bec
- 7.: Châssis
- 8.: Volet
- 9.: Elément de chargement
- 10.: Corps de vérin
- 11a.: Pattes
- 11b.: Pattes
- 12.: Zone de blocage
- 13.: Portion filtrante
- 14.: Support
- 15.: Ergot
- 16.: Surface de montage
- 17.: Couronne de blocage
- 18.: Butée
- 19.: Guide
- 20.: Rail
- 21.: Conditionnement
- 22.: Mouture
- 23.: Paroi
- 24.: Paroi
- 25.: Face de blocage
- 27.: Partie annulaire
- 29.: Elément de rigidification

## Revendications

1. Système de production de boisson infusée comprenant un dispositif (1) pour l'infusion d'une substance à infuser et une pluralité de conditionnements (21) de types différents contenant une substance à infuser, le dispositif (1) présentant une chambre d'infusion destinée à recevoir un conditionnement (21) et à faire passer un flux d'eau sous pression au travers de la substance à infuser, la chambre d'infusion présentant une partie d'entrée (2) comprenant une tête d'entrée (4) d'eau dans la chambre d'infusion et une partie de sortie (3) comprenant au moins une tête de sortie (5) de boisson infusée, la partie d'entrée (2) et la partie de sortie (3) étant agencées pour être mutuellement éloignées pour ouvrir la chambre d'infusion ou rapprochées pour fermer la chambre d'infusion par des moyens de déplacement,
**caractérisé en ce qu'**il comporte plusieurs têtes de sortie (5) interchangeables chacune munie de moyens de fixation amovible, et/ou plusieurs têtes d'entrée (4) interchangeables chacune munie de moyens de fixation amovible, et **en ce que** les conditionnements de la pluralité de conditionnements (21) présentent des types différant par la perte de charge qu'ils génèrent sur le flux d'eau, chaque type de conditionnement (21) étant associé à une tête d'entrée (4) et une tête de sortie (5) déterminées de sorte à ce que les pertes de charges cumulées générées par chaque jeu associant un type de conditionnement (21), une tête d'entrée (4) et une tête de sortie (5) soient identiques.

2. Système selon la revendication précédente dans lequel chaque conditionnement (21) comporte une enveloppe contenant la substance à infuser et réalisée avec deux parois (23, 24) à base de papier filtre.

3. Système selon l'une des revendications précédentes dans lequel la substance à infuser est de la mouture (22) de café et dans lequel au moins une partie des types de conditionnement (21) diffèrent par la granulométrie de la mouture (22) qu'ils contiennent.

4. Système selon l'une des revendications précédentes dans lequel la substance à infuser est de la mouture (22) de café et dans lequel au moins une partie des types de conditionnement (21) diffèrent par le degré de tassage de la mouture (22) qu'ils contiennent.

5. Système selon l'une des revendications précédentes dans lequel, pour chaque jeu, la tête d'entrée (4), la tête de sortie (5) et le conditionnement (21) comportent chacun un moyen d'identification du jeu auquel ils appartiennent.

6. Système selon la revendication précédente dans lequel les moyens d'identification comportent une portion de surface extérieure d'une couleur pré déterminée et dans lequel la couleur pré déterminée de chaque jeu est différente.

7. Système selon l'une des revendications précédentes dans lequel les moyens de fixation amovible comportent des moyens d'encliquetage.

8. Système selon la revendication précédente dans lequel les moyens d'encliquetage comportent au moins une portion en relief formée sur un support apte à coopérer avec une portion en relief complémentaire formée sur une surface de montage d'un châssis (7) du dispositif (1).

9. Système selon l'une des revendications précédentes dans lequel le dispositif comporte une pompe vibrante placée dans le flux d'eau en amont de la chambre d'infusion.

10. Procédé de fabrication de boisson infusée comprenant les étapes de réalisation de boisson suivantes :
- introduction d'un conditionnement (21) contenant une substance à infuser dans une chambre d'infusion présentant une partie d'entrée (2) comprenant une tête d'entrée (4) d'eau dans la chambre d'infusion et une partie de sortie (3) comprenant une tête de sortie (5) de boisson infusée,
- rapprochement de la partie d'entrée (2) et de la partie de sortie (3) de sorte à fermer la chambre d'infusion,
- passage d'un flux d'eau sous pression au travers de la substance à infuser,
**caractérisé par le fait que** l'on effectue les étapes préparatoires suivantes :
- mise à disposition d'une pluralité de conditionnements (21) de types différents par la perte de charge qu'ils génèrent sur le flux d'eau ;
- mise à disposition d'une pluralité de têtes de sortie (5) et/ou de têtes de sortie (5) interchangeables chacune munie de moyens de fixation amovible,
- association d'une tête de sortie (5) et/ou d'une tête d'entrée (4) à chaque type de conditionnement (21) de sorte à ce que les pertes de charges cumulées générées par chaque jeu associant un type de conditionnement (21), une tête d'entrée (4) et une tête de sortie (5) soient identiques,
- sélection d'un conditionnement,
- identification de la tête de sortie et/ou de la tête de sortie associée au conditionnement sélectionné,
- réalisation de la boisson infusée avec le conditionnement (21) sélectionné et la tête de sortie (5) et/ou la tête d'entrée (4) associée.

## Patentansprüche

1. System zur Herstellung eines Aufgussgetränks, umfassend eine Vorrichtung (1) für einen Aufguss einer aufzugießenden Substanz und eine Vielzahl von Verpackungen (21) von unterschiedlichen Typen, die eine aufzugießende Substanz enthalten, wobei die Vorrichtung (1) eine Aufgusskammer aufweist, die dazu bestimmt ist, eine Verpackung (21) aufzunehmen und einen Wasserfluss unter Druck durch die aufzugießende Substanz durchtreten zu lassen, wobei die Aufgusskammer ein Eingangsteil (2) aufweist, das einen Eingangskopf (4) für Wasser in der Aufgusskammer und ein Ausgangsteil (3) umfasst, das wenigstens einen Ausgangskopf (5) des Aufgussgetränks umfasst, wobei das Eingangsteil (2) und das Ausgangsteil (3) angeordnet sind, um voneinander entfernt zu sein, um die Aufgusskammer zu öffnen oder um angenähert zu sein, um die Aufgusskammer durch Verschiebungsmittel zu schließen,
**dadurch gekennzeichnet, dass** es mehrere austauschbare Ausgangsköpfe (5), die jeweils mit abnehmbaren Befestigungsmitteln versehen sind, und / oder mehrere untereinander austauschbare Eingangsköpfe (4), die jeweils mit abnehmbaren Befestigungen versehen sind, umfasst, und dass die Verpackungen der Vielzahl von Verpackungen sich (21) durch den Chargenverlust, den sie auf den Wasserfluss generieren, unterscheidende Typen aufweisen, wobei jeder Verpackungstyp (21) einem Eingangskopf (4) und einem Ausgangskopf (5) zugeordnet ist, die derart bestimmt sind, dass die kumulierten, von jedem Satz generierten Chargenverluste, die einem Verpackungstyp (21), einem Eingangskopf (4) und einem Ausgangskopf (5) zugeordnet sind, identisch sind.

2. System gemäß dem voranstehenden Anspruch, bei dem jede Verpackung (21) einen Umschlag umfasst, der die aufzugießende Substanz enthält und mit zwei Wänden (23, 24) auf der Basis von Filterpapier realisiert ist.

3. System gemäß einem der voranstehenden Ansprüche, bei dem die aufzugießende Substanz gemahlener Kaffe (22) ist und bei dem wenigstens ein Teil der Verpackungstypen (21) sich durch die Korngröße des gemahlenen Kaffees (22) unterscheiden, den sie enthalten.

4. System gemäß einem der voranstehenden Ansprüche, bei dem die aufzugießende Substanz gemahlener Kaffee (22) ist und bei dem wenigstens ein Teil der Verpackungstypen (21) sich vom Verdichtungsgrad des gemahlenen Kaffees (22) unterscheidet, den sie enthalten.

5. System gemäß einem der voranstehenden Ansprüche, bei dem der Eingangskopf (4), der Ausgangskopf (5) und die Verpackung (21) für jeden Satz jeweils ein Identifikationsmittel des Satzes umfassen, zu dem sie gehören.

6. System gemäß dem voranstehenden Anspruch, bei die Identifikationsmittel einen äußeren Oberflächenabschnitt einer vorbestimmten Farbe umfassen und bei dem die vorbestimmte Farbe jedes Satzes unterschiedlich ist.

7. System gemäß einem der voranstehenden Ansprüche, bei die abnehmbaren Befestigungsmittel Einrastmittel umfassen.

8. System gemäß dem voranstehenden Anspruch, bei dem die Einrastmittel wenigstens einen Reliefabschnitt umfassen, der auf einem Träger geformt ist, der geeignet ist, mit einem komplementären Reliefabschnitt zusammenzuwirken, der auf einer Montageoberfläche eines Rahmens (7) der Vorrichtung (1) geformt ist.

9. System gemäß einem der voranstehenden Ansprüche, bei dem die Vorrichtung eine Vibrationspumpe umfasst, die in den Wasserfluss vor der Aufgusskammer platziert ist.

10. Verfahren zur Herstellung eines Aufgussgetränks, umfassend die folgenden Realisierungsstufen von Getränken:
- Einführung einer Verpackung (21), die eine in einer Aufgusskammer aufzugießende Substanz enthält, die ein Eingangsteil (2) mit einem Eingangskopf (4) für Wasser in der Aufgusskammer und ein Ausgangsteil (3) mit einem Ausgangskopf (5) des Aufgussgetränks aufweist,
- Annäherung des Eingangsteils (2) und des Ausgangsteils (3) derart, dass die Aufgusskammer geschlossen wird,
- Durchgang eines Wasserflusses unter Druck durch die aufzugießende Substanz, **gekennzeichnet durch** die Tatsache, dass die folgenden Vorbereitungsstufen durchgeführt werden:
- Bereitstellung einer Vielzahl von Verpackungen (21) von sich **durch** den Chargenverlust, den sie auf dem Wasserstrom generieren, unterscheidenden Typen;
- Bereitstellung einer Vielzahl von Ausgangsköpfen (5) und / oder untereinander austauschbaren Ausgangsköpfen (5), wobei jeder mit abnehmbaren Befestigungsmitteln versehen ist,
- Zuordnung eines Ausgangskopfes (5) und / oder eines Eingangskopfes (4) zu jedem Verpackungstyp (21) derart, dass die kumulierten Chargenverluste, die **durch** jeden Satz generiert werden, der einen Verpackungstyp (21), einen Eingangskopf (4) und einen Ausgangskopf (5) zuordnen, identisch sind,
- Auswahl einer Verpackung,
- Identifizierung des Ausgangskopfes und / oder des der ausgewählten Verpackung zugeordneten Ausgangskopfes,
- Realisierung des Aufgussgetränks mit der ausgewählten Verpackung (21) und dem Ausgangskopf (5) und / oder dem zugeordneten Eingangskopf (4).

## Claims

1. A system for producing an infused drink comprising a device (1) for infusing a substance to be infused and a plurality of different packagings (21) containing the substance to be infused, the device (1) having an infusion chamber intended for receiving a packaging (21) and for passing a pressurized water flow through the substance to be infused, the infusion chamber having an inlet portion (2) comprising a water inlet head (4) into the infusion chamber and an outlet portion (3) comprising at least one outlet head (5) for the infused drink, the inlet portion (2) and the outlet portion (3) being so arranged as to be spaced apart from one another, in order to open the infusion chamber or brought close to one another in order to close the infusion chamber via a movement means,
**characterized in that** it comprises several interchangeable outlet heads (5), each one being provided with removable attachment means, and/or several interchangeable inlet heads (4), each one being provided with removable attachment means, and **in that** the packagings of the plurality of packagings (21) are of types differing in the loss of charges that they generate on the flow of water, each packaging type (21) being associated with an inlet head (4) and an outlet head (5) so determined that the cumulative losses in charge generated by each set associating a packaging (21) type, an inlet head (4) and an outlet head (5) are identical.

2. A system according to the preceding claim, wherein each packaging (21) comprises an envelope containing the substance to be infused and composed of two filter paper-based walls (23, 24).

3. A system according to one of the preceding claims, wherein the substance to be infused is ground coffee (22) and wherein at least a part of the packaging (21) types differ in the size of the ground coffee (22) they contain.

4. A system according to one of the preceding claims, wherein the substance to be infused is ground coffee (22) and wherein at least a part of the packaging (21) types differ in the degree of compaction of the ground coffee (22) they contain.

5. A system according to one of the preceding claims, wherein, for each set, the inlet head (4), the outlet head (5) and the packaging (21) each include a means for identifying the set which they belong to.

6. A system according to the preceding claim, wherein the identification means comprise a portion of an outer surface having a pre-determined colour and wherein the pre-determined colour of each set is different.

7. A system according to one of the preceding claims, wherein the removable attachment means comprise latching means.

8. A system according to the preceding claim, wherein the latching means comprise at least one raised portion formed on a support adapted to cooperate with a complementary raised portion formed on a mounting surface of a frame (7) of the device (1).

9. A system according to one of the preceding claims, wherein the device comprises a vibrating pump positioned in the water flow, upstream of the infusion chamber.

10. A method for producing an infused drink comprising the following steps for producing such drink:
- introducing a packaging (21) containing a substance to be infused into an infusion chamber having an inlet portion (2) comprising a water inlet head (4) into the infusion chamber and an outlet portion (3) comprising an outlet head (5) for the infused drink,
- bringing closer to one another the inlet portion (2) and the outlet portion (3) so as to close the infusion chamber,
- passing a pressurized water flow through the substance to be infused,
**characterized in that** the following preliminary steps are carried out:
- providing a plurality of packagings (21) of types differing in the loss in charge that they generate on the flow of water;
- providing a plurality of interchangeable outlet heads (5) and/or outlet heads (5), each one being provided with removable attachment means,
- associating an outlet head (5) and/or an inlet head (4) with each packaging (21) type, so that the cumulative losses in charge generated by each set associating a packaging (21) type, an inlet head (4) and an outlet head (5) are identical,
- selecting a packaging,
- identifying the outlet head and/or the outlet head associated with the selected conditioning,
- producing the infused drink with the selected packaging (21) and the associated outlet head (5) and/or inlet head (4).
